# EUROPEAN PATENT SPECIFICATION

(11) **EP 3 318 325 B1**
(45) Date of publication and mention of the grant of the patent: **08.04.2020**
(21) Application number: 15897247.1
(22) Date of filing: 24.09.2015
(51) Int. Cl.: B01J 20/30, B01J 20/16, C09D 163/00, F24F 3/14, B01J 20/04, B01J 20/18, B01J 20/28

(54) **IMPROVED METHOD FOR PREPARING ZEOLITE-METAL CHLORIDE HYBRID MOISTURE ADSORBENT AND MOISTURE ADSORBENT PREPARED BY SAME, AND METHOD FOR PREPARING MOISTURE ADSORBENT COMPOSITION FOR SURFACE COATING COMPRISING SAME**
VERBESSERTES VERFAHREN ZUR HERSTELLUNG EINES HYBRIDEN FEUCHTIGKEITSADSORPTIONSMITTELS AUS ZEOLITHMETALLCHLORID UND DANACH HERGESTELLTES FEUCHTIGKEITSADSORPTIONSMITTELS SOWIE VERFAHREN ZUR HERSTELLUNG EINER FEUCHTIGKEITSABSORBIERENDEN ZUSAMMENSETZUNG ZUR OBERFLÄCHENBESCHICHTUNG DAMIT
PROCÉDÉ AMÉLIORÉ POUR PRÉPARER UN ADSORBANT D'HUMIDITÉ HYBRIDE DE ZÉOLITE-CHLORURE DE MÉTAL, ET ADSORBANT D'HUMIDITÉ PRÉPARÉ PAR CE DERNIER, ET PROCÉDÉ POUR PRÉPARER UNE COMPOSITION D'ADSORBANT D'HUMIDITÉ POUR REVÊTEMENT DE SURFACE LE COMPRENANT

(30) Priority: 01.07.2015 KR 20150093906
(43) Date of publication of application: 09.05.2018
(73) Proprietor: Korea Institute Of Industrial Technology, Cheonan-si, Chungcheongnam-do 31056 (KR)
(72) Inventor: PARK, Jea Sung, Daejeon 35245 (KR); KWON, Oh Kyung, Asan-si Chungcheongnam-do 31417 (KR); PARK, In, Seoul 06630 (KR); CHA, Dong An, Cheonan-si Chungcheongnam-do 31102 (KR)
(74) Representative: D Young & Co LLP
(86) International application number: PCT/KR2015/010106
(87) International publication number: WO 2017/003025

(56) References cited:
- EP-A1- 0 668 295
- EP-B1- 2 297 288
- JP-A- H05 345 608
- KR-A- 20110 007 616
- KR-B1- 101 509 690
- KR-B1- 101 509 690
- LEE, DONG - HWAL ET AL.: 'A Study on the Preparation of ZnO/ natural Zeolite Sorbems Using Spray Dryer' THEORIES AND APPLICATIONS OF CHEM. ENG. vol. 10, no. 1, 2004, pages 718 - 721, XP055343457

## Description

### BACKGROUND OF THE INVENTION

### Field of the invention

The present invention relates to an improved method of producing a zeolite-metal chloride hybrid moisture adsorbent which is applicable to a dehumidifier and a moisture adsorption type refrigerator, more particularly, to a hybrid moisture adsorbent of a porous zeolite and a metal chloride, a surface coating composition comprising the same, and production methods thereof.

### Description of the Related Art

An effective utilization of energy has currently become a key issue all over the world. Particularly, researches on technologies for using various industrial waste heats generated in industrial fields are actively being conducted. Although the industrial waste heats mostly include heats in a temperature range of 70 to 90 °C which are generated in various forms of medium to low temperature water, saturated water vapor and the like, most of the industrial waste heats are discarded without being reused.

An adsorption type refrigeration system has been receiving attention as a method of effectively utilizing these waste heat energies. From the beginning of the 1980s, the refrigeration system using adsorption has been utilized natural refrigerants such as water, alcohol, ammonia and the like, and adsorbents such as silica gel, zeolite, activated carbon and the like. In 1986, a 17 kW-grade adsorption type refrigerator using silica gel/water was commercialized in Japan. Currently, Nishiyodo Kuchouki, Co., Ltd and Mayekawa Manufacturing Co., Ltd have been selling 70 to 500 kW-grade adsorption type refrigerators in Japan after the commercialization thereof, and SorTech AG of Germany has been selling 7.5 kW-grade and 15 kW-grade cooling systems associated with solar heat after the development thereof.

The adsorption type refrigeration system is an eco-friendly system which can use waste heats discarded from respective processes as a driving source, and which is not related to the destruction of the ozone layer by using water as the refrigerant. Although a silica gel and water are used in an existing commercialized adsorption type refrigeration system, the silica gel tends to begin the adsorption at a low water vapor partial pressure due to its strong hydrophilicity. Further, in a driving pressure range (P/P₀=0.1 to 0.3) of the adsorption type refrigeration system, an adsorption speed is slow, desorption is not easy, and an amount of water adsorbed per each unit adsorbent is significantly low as about 0.1 g-water/g-sorbent (g-water/g-sorbent: the number of grams sorbed per 1 g of the sorbent). Namely, a noble moisture adsorption composition having a higher water adsorption amount within a driving pressure range is required to improve performance of the adsorption type refrigeration system and reduce apparatus costs.

Korean Patent Registration No. 10-0542613 has described a method of producing an adsorbent, the method comprising: impregnating activated diatomite with 5 to 30 wt% of a solution of nitrates or sodium sulfate (Na2S04) and 5 to 10 wt% of an additive of sulfates as an antioxidant with respect to raw materials; drying the raw material-impregnated activated diatomite at 150 to 600 °C in a drying furnace for 30 minutes to 1 hour and 30 minutes; and naturally cooling the dried resulting material. Korean Patent Registration No. 10-0542613 has described a technology of using each of activated clayey or porous natural ores (zeolite, diatomite, bentonite, and vermiculite) or mixing appropriate amounts thereof, injecting the solution of nitrates or sodium sulfate (Na2S04) into each of the activated clayey or porous natural ores or the mixture thereof, thereby impregnating particles of the activated clayey or porous natural ores with the solution of nitrates or sodium sulfate (Na2S04). However, there has been a problem that a moisture absorption amount within a required operation range of P/P₀=0.1 to 0.3 has not been sufficient.

Meanwhile, in order to apply the moisture adsorption composition to various application fields including a dehumidifier, an adsorption type cooler, a heat pump, a building air conditioning system, an automobile air conditioning system, a dish dryer and the like, a technology for coating a prepared moisture adsorption composition on a specific surface, thereby fixing the moisture adsorption composition to the specific surface is required.

In this regard, Japanese Laid-Open Patent Publication No. 2005-501688, as a method of producing an adsorbent laminate for a high frequency pressure swing adsorption (PSA) method, has disclosed a production method comprising: forming a liquid suspension agent, an adsorbent and a binder; and coating the slurry on a support material or mixing the support material with the slurry to manufacture a laminate. Japanese Laid-Open Patent Publication No. 2005-501688 has described a feature for forming a zeolite layer on a metal plate in that zeolite as an activated adsorbent is used, and an adsorbent laminate is formed along with various sheet supports. However, there has been a problem that the moisture absorption amount within the required operation range of P/P₀=0.1 to 0.3 has not been sufficient.

KR 101 509 690B1 and JP H05 345608A each describe a prior art device.

### SUMMARY OF THE INVENTION

Aspects of the present disclosure are defined by the appended Claims.

### BRIEF DESCRIPTION OF THE DRAWINGS

FIG. 1 is a flowchart showing a method of producing the moisture adsorbent according to the present invention.
FIG. 2 is a schematic diagram showing a state of drying the second solution using a spray dryer according to the present invention.
FIG. 3 is a schematic diagram showing a process of drying the droplets formed by spraying the second solution within the spray dryer according to the present invention.
FIG. 4 is a flowchart showing a method of preparing the moisture adsorption composition for surface coating according to the present invention.
FIG. 5 is a schematic diagram showing a state that the moisture adsorption composition for surface coating is coated on the surface according to the present invention.
FIG. 6 is a moisture adsorption isothermal line graph of the moisture adsorbent produced according to the present invention and the moisture adsorbent according to the prior art.
FIG. 7 is a moisture adsorption isothermal line graph of a moisture adsorption material produced using the moisture adsorption composition for surface coating prepared according to the present invention.
FIG. 8 is a moisture adsorption isothermal line graph of the moisture adsorption material according to the prior art.
FIG. 9 is a graph showing results obtained by repeatedly measuring moisture adsorption and desorption amounts of the moisture adsorption material produced according to the present invention.

### DERAILED DESCRIPTION OF THE PREFERRED EMBODIMENTS

To achieve the technical objective, the present invention provides a method of producing a zeolite-metal chloride moisture adsorbent, the method comprising the steps of dissolving a metal chloride into water to prepare a first solution, mixing a porous zeolite including a ferroaluminophosphate zeolite with the first solution to prepare a second solution, spraying the second solution to form droplets having a predetermined average particle diameter, and drying the droplets to produce a moisture adsorbent, wherein the steps of forming the droplets and drying the droplets are carried out by using the spray dryer.

Furthermore, the spray dryer of the present invention may be any one sprayer selected from a pressurization nozzle type sprayer, an ultrasonic wave type sprayer, and a disc type sprayer. The droplets sprayed and formed through the sprayer can be dried by infusing a heated gas into the droplets.

Furthermore, according to the invention, the step of spraying or the step of drying the droplets is conducted at 100 to 150 °C.

In addition, the metal chloride in the present invention may include one or more selected from the group consisting of calcium chloride (CaCl₂), magnesium chloride (MgCl₂) and lithium chloride (LiCI), the ferroaluminophosphate zeolite is ferroaluminophosphate-5 (FAPO₄-5) zeolite, the ferroaluminophosphate zeolite has pores of 0.3 to 1.5 nm formed in particles thereof, and the ferroaluminophosphate zeolite has a particle size of 50 to 50,000 nm.

Moreover, the metal chloride may be included in an amount of 20 to 300 parts by weight with respect to 100 parts by weight of the ferroaluminophosphate zeolite.

To achieve the technical objective, the present invention provides the moisture adsorbent produced by the production method.

Furthermore, the present invention provides a method of preparing the moisture adsorption composition for surface coating, the method comprising the steps of dispersing the moisture adsorbent in a dispersant to prepare a dispersion, adding an epoxy-based binder resin to the dispersion, and adding a curing agent to the epoxy-based binder resin added dispersion.

In addition, the moisture adsorption composition prepared by the method of preparing the moisture adsorption composition for surface coating according to an embodiment of the present invention has a maximum moisture adsorption amount of 0.2 to 0.9 g-water (water)/g-sorbent (adsorbent) in a range of P/P₀=0.1 to 0.3 that is a driving pressure range of the adsorption type refrigerator.

Moreover, in the method of preparing the moisture adsorption composition, the epoxy-based binder resin may be included in an amount of 3.75 to 11.25 parts by weight with respect to 100 parts by weight of the moisture adsorbent, and the curing agent may be included in an amount of 1 to 10 parts by weight with respect to 100 parts by weight of the moisture adsorbent.

Furthermore, the epoxy-based binder resin in the present invention includes one or more binder resins selected from the group consisting of novolac epoxide, bisphenol A, bisphenol F, noborac epoxide, non-aromatic epoxide, alicyclic epoxide, glycidyl ester, and epoxy functional acryl.

Furthermore, the present invention provides a technology related to an air conditioner and a dehumidifier which include an adsorption unit produced by comprising the moisture adsorption composition.

### BEST MODE FOR CARRYING OUT THE INVENTION

Hereinafter, the present invention will be described with reference to the accompanying drawings. However, the present invention may be implemented in various forms and not limited to the embodiments described herein accordingly. In the accompanying drawings, portions unrelated to the description will be omitted in order to obviously describe the present invention, and similar reference numerals will be used to describe similar portions throughout the present specification.

It will be understood throughout this specification that when a part is referred to as being "connected (accessed, contacted or coupled)" to another part, it can be "directly connected" to the other part or may be "indirectly connected" to the other element with member(s) interposed therebetween. Also, when a part is referred to as "including" an element, other elements may be further included not excluded unless there is any other particular mention on it.

The terms used in the present specification are intended to merely describe specific embodiments, but not intended to limit the present invention. The expression in the singular form in the present specification will cover the expression in the plural form unless otherwise indicated obviously from the context. The terms such as "include" and "have" are intended to indicate that features, numbers, steps, operations, elements, components, or combinations thereof used in the specification exist and it should thus be understood that the possibility of existence or addition of one or more other different features, numbers, steps, operations, elements, components, or combinations thereof is not excluded.

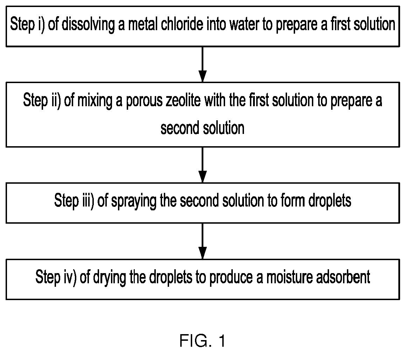

A flowchart on a method of producing the moisture adsorbent according to an embodiment of the present invention is described in FIG. 1, and the present invention is described referring to FIG. 1.

The method of producing the zeolite-metal chloride 300 hybrid moisture adsorbent according to the present invention comprises, as main production steps, the steps of i) dissolving a metal chloride 300 into water to prepare a first solution, ii) mixing the first solution with a porous zeolite 100 including the ferroaluminophosphate zeolite to prepare a second solution, iii) spraying the second solution to form droplets 621 having a predetermined average particle diameter, and iv) drying the droplets 621 to prepare the moisture adsorbent.

Hereinafter, the present invention will be described more in detail as a method of explaining the respective production steps in detail.

In the step i) of the present invention, the metal chloride 300 may include one or more selected from the group consisting of calcium chloride (CaCl₂), magnesium chloride (MgCl₂), and lithium chloride (LiCI). In addition to the above-mentioned metal chloride 300, zinc chloride, sodium hydroxide and potassium hydroxide exhibiting deliquescence may be used. However, the defined metal chlorides 300 have advantages when considering production costs, process efficiency, and performance of the moisture adsorbent produced by the production method according to the present invention. Therefore, although the defined metal chlorides 300 are specified as the metal chloride 300, it should be noted that the defined metal chlorides 300 are not limited to the metal chloride 300. In addition, it may be preferable that the metal chloride 300 is agitated at a predetermined speed until the metal chloride 300 is completely dissolved into water in the step i) of the present invention. In a step which is described below and includes performing a process of impregnating the porous zeolite 100 with a solution comprising the metal chloride 300, impregnation efficiency may be deteriorated when performing the impregnation process using a solution of the metal chloride 300 that is not completely dissolved. Moreover, in order to rapidly dissolve the metal chloride 300, the metal chloride 300 is heated to a predetermined temperature to prepare the first solution.

Next, in the step ii) as a step of mixing the prepared first solution with the porous zeolite 100 including the ferroaluminophosphate zeolite, a plurality of pores 110 with a predetermined size are formed in the porous zeolite 100, and the porous zeolite 100 has desorption characteristics when moisture is adsorbed onto the porous zeolite 100, and then the moisture-adsorbed porous zeolite 100 is heated to a high temperature. In order to achieve high moisture adsorption performance in the present invention, a ferroaluminophosphate-5 (FAPO₄-5) having an excellent moisture adsorption amount is selected, the FAPO₄-5 may be characterized by having the pores 110 with an average diameter of 0.3 to 1.5 nm formed in particles thereof, and including the particles having an overall particle size of 50 to 50,000 nm. In general, the FAPO₄-5 shows a tendency that as the particle size becomes smaller, the specific surface area of the particles is increased such that the moisture adsorption amount is also increased. However, if the particle size becomes smaller than 50 nm, when the FAPO₄-5 is dispersed into a binder to form a coating composition, an aggregation between moisture adsorbents is caused to generate a problem that adsorption performance is deteriorated. If the particle size becomes not smaller than 50,000 nm, since the specific surface area of the particles is decreased, it may be difficult to achieve a target adsorption performance. Further, a composition ratio of the metal chloride 300 and the ferroaluminophosphate zeolite is a factor having influence on the adsorption performance. According to a preferred embodiment of the present invention, 20 to 30 parts by weight of the metal chloride 300 may be included with respect to 100 parts by weight of the ferroaluminophosphate zeolite. The present invention has limited the composition ratio described above to achieve a target moisture adsorption ability using the moisture adsorbent. However, it is specified that the composition ratio is not limited thereto.

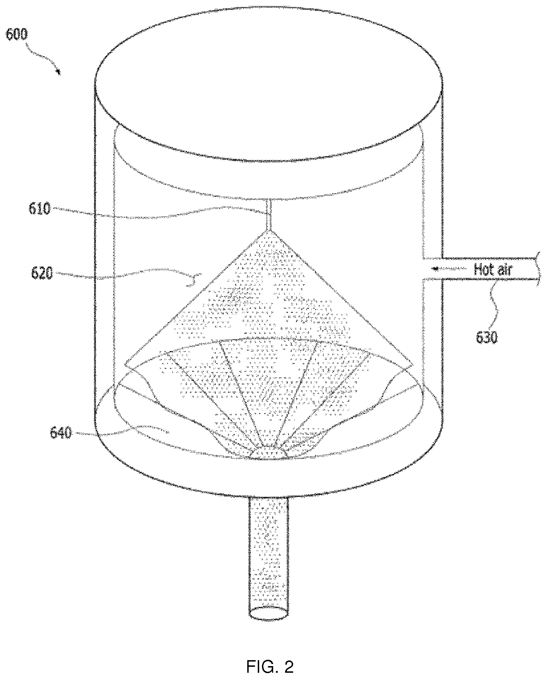

Next, the step iii) and the step iv) of the present invention may be performed using a spray dryer 600. The spray dryer 600 may include any one sprayer selected from a pressurization nozzle type sprayer, an ultrasonic wave type sprayer, and a disc type sprayer. However, the spray dryer 600 is not limited thereto. A schematic diagram showing drying of the second solution using the spray dryer is illustrated in FIG. 2. The step iii) and the step iv) of the present invention will be described with reference to FIG. 2. The spray dryer 600 may include a spray unit 610, a drying chamber 620, a heated gas inlet 630, and a collection unit 640. The second solution is injected at a predetermined rate through an inflow port (not shown) of the spray unit 610, and the injected second solution is pressurized such that the second solution passes through a nozzle having a predetermined length (not shown), and the second solution passing through the nozzle is sprayed into the drying chamber 620. The second solution is sprayed in the form of droplets 621 with a predetermined size within the drying chamber 620. At this time, the second solution in the form of the droplets 621 is rapidly dried by a high temperature heated gas injected through the heated gas inlet 630 provided in the spray dryer 600. The heated gas injected into the drying chamber 620 may be general air or an inert gas such as nitrogen or helium. In terms of production costs, it is efficient to inject general air into the drying chamber 620, and if the moisture adsorbent is a material that is vulnerable to moisture or oxygen, it is preferable to secure safety of the material using the above-mentioned inert gas. However, the heated gas is not limited thereto.

On the other hand, there is an advantage in the drying method according to the present invention that the size of a powder prepared according to specifications of the spray unit 610 for spraying the solution can be easily adjusted. There has been a disadvantage in the prior art that a drying time is very long according to drying into a bulk state a solution in which the metal chloride 300 and the porous zeolite 100 are mixed, and the prior art has further required the step of milling the dried solution with a milling machine such as a ball mill to increase the surface area of the moisture adsorbent after drying the solution. However, the present invention not only can dry the second solution rapidly, but also can produce a moisture adsorbent with a target surface area without performing an additional milling step thereafter by spraying the second solution, thereby forming the droplets 621. In addition, the spray unit 610 or the drying chamber 620 is heated to a predetermined temperature such that the drying process can be proceeded more quickly. It is specified that the heating temperature is 100 to 150 °C.

However, if the heating temperature is less than 100 °C, a problem of deteriorated moisture adsorption properties may be generated since drying efficiency of the droplets is low. If the heating temperature exceeds 150 °C, stability of zeolite-metal chloride may be deteriorated. If a high temperature process condition is created, process costs are increased. Therefore, the heating temperature is limited to the above-mentioned temperature considering process efficiency and performance of the moisture adsorbent produced.

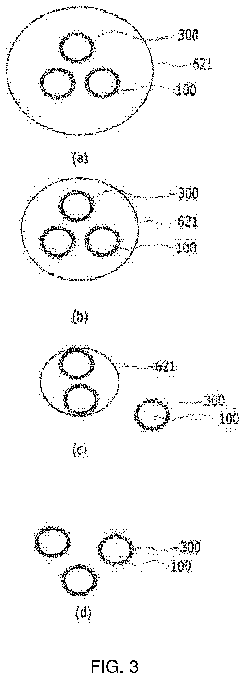

The droplets sprayed into the drying chamber 620 are dried while the droplets are being dropped to the collection unit 640. A schematic diagram showing a state that the droplets sprayed into the drying chamber are dried is illustrated in FIG. 3. Referring to FIG. 3, the droplets 621 sprayed into the drying chamber 620 have a plurality of moisture adsorbents contained therein, and the droplets 621 are dried by the heated gas injected into the drying chamber 620 through the heated gas inlet 630 while the droplets 621 are being dropped to a bottom of the drying chamber 620. While the droplets 621 are being dropped, size of the droplets 621 is gradually decreased such that a completely dried moisture adsorbent can be obtained in the collection unit 640.

In order to easily explain the process of spraying the second solution to form the droplets 621 and drying the droplets 621, the spray dryer according to an embodiment of the present specification is illustrated in FIG. 3. However, it is specified that configuration and form of the spray dryer are not limited thereto, but may be variously implemented.

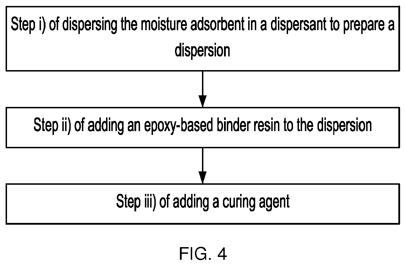

In addition, the present invention provides a method of preparing a moisture adsorption composition for surface coating using the zeolite-metal chloride hybrid moisture adsorbent produced by the aforementioned production method. A flowchart related to the method of preparing the moisture adsorption composition for surface coating is illustrated in FIG. 4, and the method of preparing the moisture adsorption composition for surface coating is described referring to FIG. 4. The method of preparing the moisture adsorption composition for surface coating of the present invention comprise, as main production steps, the steps of i) dispersing the moisture adsorbent in a dispersant to prepare a dispersion, ii) adding an epoxy-based binder resin to the dispersion to prepare a composition, and iii) adding a curing agent to the composition of the step ii). Hereinafter, the present production method will be described in detail as a method of explaining the respective production steps in detail.

First, the step i) of the present invention is a step of adding the aforementioned moisture adsorbent to the dispersant, thereby dispersing the moisture adsorbent in the dispersant to prepare the dispersion. The dispersant performs the function of evenly dispersing solid particles in the solution, and alleviates a phenomenon that the moisture adsorbent of the present invention is aggregated. If the moisture adsorbent exists in a state that the moisture adsorbent is aggregated in the surface coating composition, the dispersant is added since differences in physical properties for respective portions of the moisture adsorption material are caused when the moisture adsorption material is produced by coating the composition on a substrate. The dispersant may include water soluble polymers such as poly(ethylene glycol) methacrylate (PEGMA), polyvinyl alcohol (PVA), and polyethylene glycol (PEG). However, the dispersant is not limited thereto. It is preferable to agitate the dispersant and the moisture adsorbent at a predetermined agitation speed using an agitator in order to disperse the moisture adsorbent in the dispersant more evenly. Next, the step ii) of the present invention is a step of adding the epoxy-based binder resin to the dispersion to provide surface coating properties to the dispersion. To provide coating properties with respect to various substrates including glass, metal, plastics and the like, the binder resin is added, and the epoxy-based binder resin is used in the present invention. At this time, it is preferable that the epoxy-based binder resin is included in an amount of 3.75 to 11.25 parts by weight with respect to 100 parts by weight of the moisture adsorbent. It may be difficult to coat the epoxy-based binder resin on the substrate since the surface coating properties are not sufficient if the epoxy-based binder resin is included in an amount of 3.75 parts by weight or less with respect to 100 parts by weight of the moisture adsorbent. It may be difficult to achieve a target moisture adsorption amount since the amount of the moisture adsorbent is relatively decreased if the epoxy-based binder resin is included in an amount of 11.25 parts by weight or more with respect to 100 parts by weight of the moisture adsorbent. However, it is specified that the amount of the epoxy-based binder resin is not limited thereto. Moreover, the epoxy-based binder resin may be specifically selected from novolac epoxide, bisphenol A, bisphenol F, noborac epoxide, non-aromatic epoxide, alicyclic epoxide, glycidyl ester, and epoxy functional acryl resins. However, the epoxy-based binder resin is not limited thereto, but may include a urethane-based binder resin, an acrylic binder resin, and the like. The epoxy-based binder resin may be preferable in terms of coating properties, compatibility with the moisture adsorbent of the present invention, and costs. The epoxy-based binder resin is selected in the present invention since the epoxy-based binder resin is inexpensive and has easily adjustable physical properties.

Next, the step iii) of the present invention is a step of adding the curing agent to the composition prepared in the step ii). The curing agent is a material which is added to the epoxy-based binder resin in order to cure the epoxy-based binder resin such that the cured epoxy-based binder resin is coated on one surface of the substrate. Curing of the epoxy-based binder resin is accelerated by the curing agent when the substrate is coated with the moisture adsorption composition for surface coating prepared by adding the curing agent to the epoxy-based binder resin, and heat is applied to the composition-coated substrate or ultraviolet rays are irradiated on the composition-coated substrate. Hardness of the moisture adsorption material is determined according to an addition amount of the curing agent. In order to achieve target hardness and moisture adsorption properties in the present invention, the moisture adsorption composition for surface coating is prepared by including 1 to 10 wt% of the curing agent with respect to 100 parts by weight of the moisture adsorbent. Specific examples of the curing agent may include amine-based curing agent, acid anhydride-based curing agents, and the like. However, the curing agent is not limited thereto. In addition, it is specified that, if necessary, content of the curing agent may vary depending on equivalents of epoxy groups included in the epoxy-based binder resin.

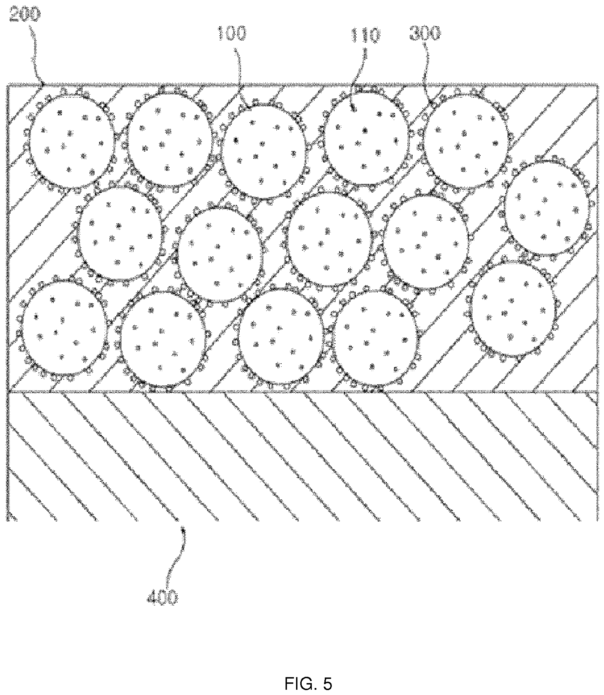

Furthermore, the moisture adsorption composition for surface coating prepared by the preparation method according to the present invention comprises: a moisture adsorbent including a porous zeolite 100 and deliquescent metal chloride 300; and a binder resin 200, wherein the porous zeolite 100 includes the ferroaluminophosphate zeolite, the moisture adsorbent is formed by impregnating the surface of particles of the porous zeolite 100 with the metal chloride 300, the binder resin 200 is an epoxy-based binder resin, and the moisture adsorption composition has a maximum moisture adsorption amount of 0.2 to 0.9 g-water (water)/g-sorbent (adsorbent) in a range of P/P₀=0.1 to 0.3 that is a driving pressure range of the adsorption type refrigerator. A schematic diagram showing a state that the moisture adsorption composition for surface coating according to the present invention is coated on the surface is illustrated in FIG. 5. As illustrated in FIG. 5, the moisture adsorption material can be produced through the processes of coating the moisture adsorption composition for surface coating prepared by the preparation method according to the present invention on one surface of a substrate 400 and curing the moisture adsorption composition coated on the substrate surface to a predetermined temperature. A more detailed description thereof will be provided in the following examples.

Hereinafter, effects of the present invention will be described in more detail through examples and experimental examples.

### [Example 1]

### Production of a moisture adsorbent using a nozzle type spray dryer

A metal chloride solution was prepared by completely dissolving 250 g of CaCl₂ into 500 mL of water. Next, 500 g of FAPO₄-5 (here, composition ratio of the ferroaluminophosphate zeolite is as follows: Al₂O₃: P₂O₅: FeO: TEA: H₂O=1:1.05:0.1:1.2:50) was added to the metal chloride solution, and FAPO₄-5 and the metal chloride solution were evenly mixed. After completely mixing FAPO₄-5 and the metal chloride solution to prepare a solution, the solution was injected into a pressurization nozzle, and the solution injected into the pressurization nozzle was sprayed at a speed of 5 ml/min using a pump to form droplets. At this time, an inner temperature of the drying chamber was fixed to about 100 °C, and general air was used as the heated gas. After operating the spray dryer for about 1 hour, 89.5 g of a completely dried FAPO₄-5/CaCl₂ hybrid moisture adsorbent was recovered from the bottom of the drying chamber, wherein the produced moisture adsorbent had a ratio of FAPO₄-5 to CaCl₂ of 100:40.

### [Example 2]

### Production of a moisture adsorbent using a disc type spray dryer

A moisture adsorbent was produced under the same conditions as in Example 1 except that the droplets were formed through a disc type spray unit.

### [Comparative Example 1]

A moisture adsorbent was produced under the same conditions as in Example 1 except that a mixed solution of the metal chloride solution and the ferroaluminophosphate zeolite was put into a drying oven of 150 to 200 °C, the mixed solution was dried in the drying oven for 24 hours to produce a product, the product was injected into a ball mill to obtain a powder type material, and a redrying process of removing residual moisture of the powder type material in a vacuum dryer was performed.

### [Experimental Example 1]

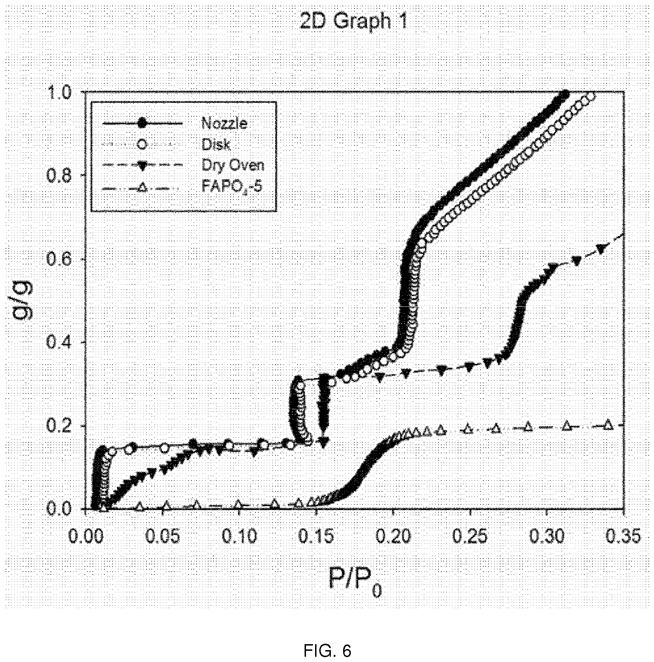

Moisture adsorption isothermal analyses were conducted at a condition of 25 °C to confirm moisture adsorption properties of the moisture adsorbents produced according to Example 1, Example 2, and Comparative Example 1. Further, moisture adsorption isothermal analyses on FAPO₄-5 were also conducted at the same condition to examine the moisture adsorption properties according to addition of the metal chloride, and results of the moisture adsorption isothermal analyses are shown in FIG. 6. Further, maximum moisture adsorption amounts of Example 1, Example 2 and Comparative Example 1 in an adsorption type refrigerator driving pressure range (P/P₀=0.1 to 0.3) are represented in Table 1.

**[Table 1]**

| | Example 1 | Example 2 | Comparative Example 1 |
|---|---|---|---|
| Maximum moisture adsorption amount [mg/g] | 812 | 785 | 417 |

First, referring to a graph shown in FIG. 6, it can be confirmed that the moisture adsorbent including only the ferroaluminophosphate zeolite has remarkably low moisture adsorption properties compared with Example 1, Example 2 and Comparative Example 1 using the zeolite-metal chloride hybrid moisture adsorbent. These results may be considered that the moisture adsorption properties are increased in Example 1, Example 2 and Comparative Example 1 since the metal chloride with deliquescence is additionally included in the porous zeolite with the moisture adsorption properties in Example 1, Example 2 and Comparative Example 1. Further, referring to the graph of FIG. 6 and the Table 1, it has been confirmed that the moisture adsorbents of Example 1 and Example 2 produced by a spray drying method have maximum moisture adsorption amounts that are about twice as much as the moisture adsorbent of Comparative Example 1 produced by an existing drying oven method. It is determined that the maximum moisture adsorption amounts of the moisture adsorbents produced by the spray drying method are increased since the spray drying method is capable of removing moisture more perfectly by spraying the solution to form droplets with a small particle diameter, and drying the droplets.

Further, it has been confirmed that there is a difference also in the maximum moisture adsorption amounts of the moisture adsorbents according to Example 1 and Example 2, and it may be determined that the difference in the maximum moisture adsorption amounts are derived from a difference of the spraying methods. Small-sized droplets can be formed when a mixed solution of the metal chloride and the zeolite is sprayed by the nozzle type sprayer compared to when the mixed solution of the metal chloride and the zeolite is sprayed by the disc type sprayer, and surface areas of the droplets increase as sizes of the droplets decrease. Therefore, the drying efficiency shall be high when the mixed solution of the metal chloride and the zeolite is sprayed by the nozzle type sprayer. Accordingly, it can be seen that the moisture adsorbent of Example 1 produced using the nozzle type spray dryer exhibits more excellent moisture adsorption performance.

In the present invention, moisture adsorption compositions for coating surface were prepared using the moisture adsorbents produced by Example 1, Example 2 and Comparative Example 1, and the moisture adsorption compositions for coating surface were coated on the substrate to produce the moisture adsorption material.

Hereinafter, Examples and Experimental Examples related to the moisture adsorption material will be described.

### [Example 3]

A surface coating composition was prepared to a following composition in order to coat the moisture adsorbent produced by the method of Example 1 on the surface of a copper plate.

1 kg of the moisture adsorbent of Example 1 was mixed with 1 L of poly(ethylene glycol) methacrylate (PEGMA) as a dispersant to obtain a mixture, and the mixture was dispersed at a speed of 7,000 revolutions per minute for 4 hours using a high speed emulsifier to prepare a dispersed solution. 75 g of a phenol novolac epoxy-based binder resin (YDPN-638A80) was added to the dispersed solution, and the dispersed solution having the phenol novolac epoxy-based binder resin (YDPN-638A80) added thereto was dispersed to the same speed for 30 minutes to obtain a dispersion-completed solution. 40 g of a cycloaliphatic anhydride-based curing agent HN-2200 was put into the dispersion-completed solution, and the cycloaliphatic anhydride-based curing agent HN-2200 and the dispersion-completed solution were agitated to the same speed to prepare a surface coating composition.

Next, the surface coating composition was coated on the substrate using a dip coating method. First, after grinding the surface of the copper plate using a sandpaper and washing the ground surface of the copper plate using ethanol, and the washed ground surface of the copper plate was dried. After fixing the dried copper plate to a dip coater, a coating process was proceeded by vertically dipping the dried copper plate into a coating solution, and then ascending the dried copper plate dipped into the coating solution to a speed of 3 mm per second. After completing the process of coating a front surface of the copper plate, the coated front surface of the copper plate was dried at room temperature for 2 hours, and the dried front surface of the copper plate was heat-treated in the oven for 2 hours and heat-treated at 180 °C for 8 hours to produce a moisture adsorption material. At this time, the moisture adsorption material provided on the copper plate had a thickness of 0.114 mm.

### [Comparative Example 2]

A moisture adsorption material was produced under the same conditions as in Example 3 except that the moisture adsorbent of Comparative Example 1 was used. At this time, the moisture adsorption material provided on the copper plate has a thickness of 0.074 mm.

### [Experimental Example 2]

Moisture adsorption isothermal analyses were conducted at a condition of 25 °C to confirm moisture adsorption properties of the moisture adsorption materials produced by methods of Example 3 and Comparative Example 2.

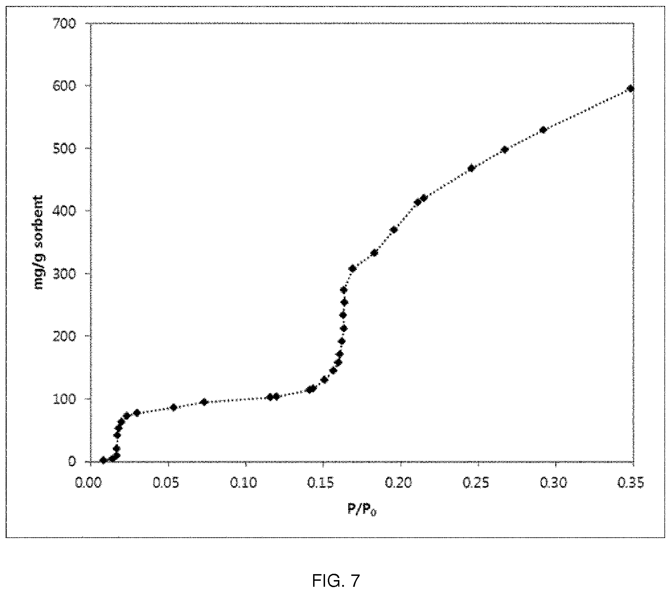

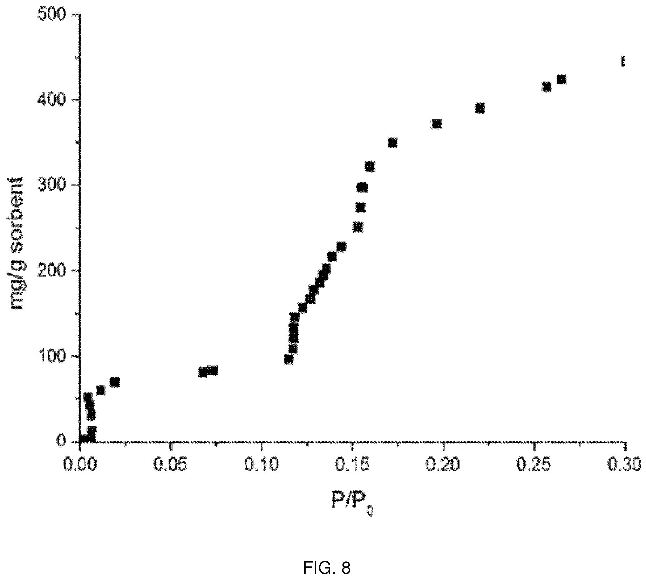

A moisture adsorption isothermal line graph of the moisture adsorption material produced by the method of Example 3 is shown in FIG. 7, and a moisture adsorption isothermal line graph of the moisture adsorption material produced by the method of Comparative Example 2 is shown in FIG. 8. Further, moisture adsorption properties of Example 3 and Comparative Example 2 in an adsorption type refrigerator driving pressure range (P/P₀=0.1 to 0.3) are represented in Table 2, wherein the moisture adsorption properties denote differences between maximum values and minimum values of moisture adsorption amounts in the driving pressure range.

**[Table 2]**

| | Example 3 | Comparative Example 2 |
|---|---|---|
| Maximum moisture adsorption properties [mg/g] | 439 | 350 |

Referring to FIG. 7, FIG. 8 and Table 2, it can be confirmed that the moisture adsorption material of Example 3 has more excellent moisture adsorption properties in the adsorption type refrigerator driving pressure range than the moisture adsorption material of Comparative Example 2. It is determined that the above results are derived from excellent drying efficiency of the aforementioned spray dryer.

Further, a phenomenon that moisture adsorption properties are slight lowered is generated in the moisture adsorption material produced using the moisture adsorbent as the moisture adsorption material produced using the moisture adsorbent comprises a binder resin, a curing agent, and the like. However, it can be confirmed that the moisture adsorption material produced using the moisture adsorbent has a maximum moisture adsorption amount of 0.2 g/g or more in a range of P/P₀=0.1 to 0.3 that is a driving pressure range of the adsorption type refrigerator.

### [Experimental Example 3]

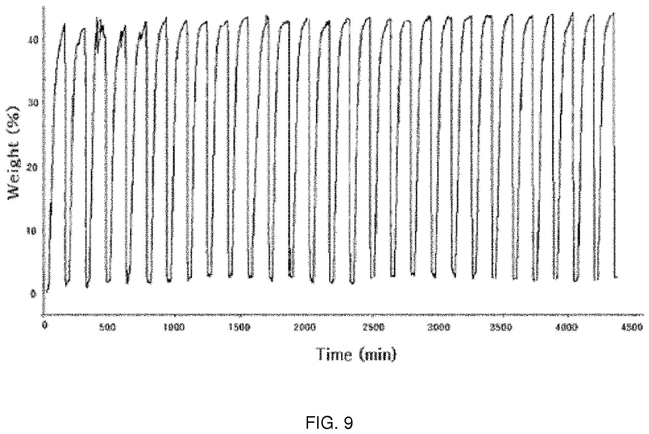

In order to measure stabilities in processes of adsorbing and desorbing moisture of the moisture adsorption material according to the present invention, a moisture adsorption amount and a moisture desorption amount were repeatedly measured at 25 to 80 °C using a thermogravimetric analyzer, and measurement results of the moisture adsorption amount and the moisture desorption amount are shown in FIG. 9. It can be confirmed that referring to FIG. 9 that, when the moisture adsorption material absorbs or desorbs the moisture, 40% of an increase or decrease in the weight is generated, and there is hardly any change in 40% of the increase or decrease in the weight although the moisture adsorption or desorption is repeatedly performed.

Summarizing the above-mentioned Experimental Examples, it is confirmed that the moisture adsorbent according to the present invention has excellent moisture adsorption properties and durability in the driving pressure range of the adsorption type refrigerator compared with the moisture adsorbent dried and produced by the existing drying oven method. Further, when producing the moisture adsorbent in the prior art, the drying step that has been requiring at least 24 hours or more is dramatically reduced to about 1 to 2 hours such that process efficiency can be improved, and reduction of process costs can be expected accordingly.

In addition, the moisture adsorbent according to the present invention exhibits 0.2 g/g or more of a maximum moisture adsorption amount in the driving pressure range of the adsorption type refrigerator. This numerical value, as a numerical value that breaks through a limit of the adsorption material applied to an existing adsorption type refrigerator, is expected to increase air-conditioning, heating or dehumidification performance of a finished product while increasing efficiency in the process of manufacturing the adsorption unit when applying the moisture adsorption material according to the present invention to a cooling and heating device, a dehumidifier, and the like.

Although the present invention has been described along with the accompanying drawings, this is only one of various examples including the gist of the present invention and has an object of enabling a person having ordinary skill in the art to easily practice the invention. Accordingly, it is evident that the present invention is not limited to the aforementioned examples. Accordingly, the range of protection of the present invention should be interpreted based on the following claims, and all of technological spirits within the equivalents of the present invention may fall within the range of right of the present invention by changes, substitutions and replacements without departing from the gist of the present invention. Furthermore, it is evident that the configurations of some drawings have been provided to more clearly describe configurations and have been more exaggerated or reduced than actual configurations.

### Advantageous Effect(s) of the Invention

The method of producing the moisture adsorbent according to the present invention has a first effect that moisture adsorption performance can be improved using a spray drying method, a second effect that drying time can be dramatically reduced, and a third effect that overall process steps are simplified to reduce process costs.

More specifically, the prior arts have included drying a mixed solution of a metal chloride and zeolite by one or more drying methods among oven drying, vacuum drying, and freeze drying. However, the drying methods have been limited in enhancing moisture adsorption performance of the adsorbent since it is difficult to perfectly remove the moisture. Since the spray drying method of the present invention dries the droplets by spraying the mixed solution of the metal chloride and zeolite into small droplets, the spray drying method has advantages that moisture removing efficiency can be greatly improved, and drying time can be greatly reduced. Furthermore, in order to enhance adsorption performance after drying the mixed solution, an existing drying method further comprises the steps of milling a dried adsorbent to increase specific surface area of the dried adsorbent, and removing residual moisture from the milled adsorbent. Therefore, the existing drying method has not been efficient in an economical aspect of the process since an entire process time is long, and an apparatus for performing the process is further necessary. However, the spray drying method has an advantage that grinding and drying can be performed by a one-step process. Further, the spray drying method also has effects of improving moisture adsorption ability and reducing process costs since a moisture adsorbent having a large specific surface area can be produced by controlling spray conditions.

Effects of the present invention are not limited to the above-described effects, but should be understood to include all effects that can be deduced from features of inventions described in the detailed description or the claims of the present invention.

### Reference Numerals from the Figures

100: zeolite
110: pore
200: binder resin
300: metal chloride
400: substrate
600: spray dryer
610: spray unit
620: drying chamber
621: droplet
630: heated gas inlet
640: collection unit

## Claims

1. A method of producing a zeolite-metal chloride hybrid moisture adsorbent, the method comprising the steps of:
i) dissolving a metal chloride (300) into water to prepare a first solution;
ii) mixing a porous zeolite (100) including a ferroaluminophosphate zeolite with the first solution to prepare a second solution;
iii) spraying the second solution to form droplets (621) having a predetermined average particle diameter, and;
iv) drying the droplets to produce a moisture adsorbent, wherein the steps iii) and iv) are performed by using a spray dryer (600); and wherein the step iii) or the step iv) is conducted at 100 to 150 °C.

2. The method of claim 1, wherein the spray dryer includes any one sprayer selected from a pressurization nozzle type sprayer, an ultrasonic wave type sprayer, and a disc type sprayer.

3. The method of claim 1, wherein the step iv) includes infusing a heated gas into the droplets to dry the droplets.

4. The method of claim 1, wherein the metal chloride of the step i) includes one or more selected from the group consisting of calcium chloride (CaCl₂), magnesium chloride (MgCl₂) and lithium chloride (LiCl).

5. The method of claim 1, wherein the ferroaluminophosphate zeolite of the step ii) is ferroaluminophosphate-5 (FAPO₄-5) zeolite, the ferroaluminophosphate zeolite has pores of 0.3 to 1.5 nm formed in particles thereof, and the ferroaluminophosphate zeolite has a particle size of 50 to 50,000 nm.

6. The method of claim 1, wherein the metal chloride in the step ii) is included in an amount of 20 to 300 parts by weight with respect to 100 parts by weight of the ferroaluminophosphate zeolite.

7. A moisture adsorbent produced by the method of producing the zeolite-metal chloride hybrid moisture adsorbent according to any one claim selected from claim 1 to claim 6.

8. A method of preparing a moisture adsorption composition for surface coating using the zeolite-metal chloride moisture adsorbent according to claim 7, the method of preparing the moisture adsorption composition for surface coating comprising the steps of:
i) dispersing the moisture adsorbent in a dispersant to prepare a dispersion;
ii) adding an epoxy-based binder resin to the dispersion to obtain a solution; and
iii) adding a curing agent to the solution of the step ii).

9. The method of claim 8, wherein the moisture adsorption composition has a maximum moisture adsorption amount (the amount of moisture adsorbed per unit weight of the adsorbent) of 0.2 to 0.9 g/g in a range of P/P₀=0.1 to 0.3 that is a driving pressure range of an adsorption type refrigerator.

10. The method of claim 8, wherein the epoxy-based binder resin in the step ii) is included in an amount of 3.75 to 11.25 parts by weight with respect to 100 parts by weight of the moisture adsorbent.

11. The method of claim 8, wherein the curing agent in the step iii) is included in an amount of 1 to 10 parts by weight with respect to 100 parts by weight of the moisture adsorbent.

12. The method of claim 8, wherein the epoxy-based binder resin includes one or more binder resins selected from the group consisting of novolac epoxide, bisphenol A, bisphenol F, noborac epoxide, non-aromatic epoxide, alicyclic epoxide, glycidyl ester, and epoxy functional acryl.

13. A moisture adsorption composition for surface coating prepared by the preparation method according to any one of claim 8 to claim 12.

14. An air conditioner including an adsorption unit comprising the moisture adsorption composition for surface coating according to claim 13.

## Patentansprüche

1. Verfahren zur Herstellung eines hybriden Zeolith-Metallchlorid-Feuchteadsorptionsmittels, wobei das Verfahren die Schritte umfasst:
i) Lösen eines Metallchlorids (300) in Wasser, um eine erste Lösung herzustellen;
ii) Mischen eines porösen Zeoliths (100), der einen Ferroaluminophosphat-Zeolith enthält, mit der ersten Lösung, um eine zweite Lösung herzustellen;
iii) Versprühen der zweiten Lösung, um Tröpfchen (621) mit einem vorbestimmten mittleren Partikeldurchmesser zu bilden; und
iv) Trocknen der Tröpfchen, um ein Feuchteadsorptionsmittel zu erhalten, wobei die Schritte iii) und iv) unter Verwendung eines Sprühtrockners (600) durchgeführt werden; und wobei der Schritt iii) oder der Schritt iv) bei 100 bis 150 °C durchgeführt wird.

2. Verfahren gemäß Anspruch 1, wobei der Sprühtrockner eine beliebige Sprühvorrichtung ausgewählt aus einer Sprühvorrichtung vom Druckdüsentyp, einer Sprühvorrichtung vom Ultraschallwellentyp und einer Sprühvorrichtung vom Scheibentyp umfasst.

3. Verfahren gemäß Anspruch 1, wobei der Schritt iv) Infundieren eines erhitzten Gases in die Tröpfchen zum Trocknen der Tröpfchen umfasst.

4. Verfahren gemäß Anspruch 1, wobei das Metallchlorid von Schritt i) eines oder mehrere ausgewählt aus der Gruppe bestehend aus Calciumchlorid (CaCl₂), Magnesiumchlorid (MgCl₂) und Lithiumchlorid (LiCl) umfasst.

5. Verfahren gemäß Anspruch 1, wobei der Ferroaluminophosphat-Zeolith von Schritt ii) Ferroaluminophosphat-5 (FAPO₄-5)-Zeolith ist, wobei der Ferroaluminophosphat-Zeolith in Partikeln davon gebildete Poren von 0,3 bis 1,5 nm aufweist und der Ferroaluminophosphat-Zeolith eine Partikelgröße von 50 bis 50.000 nm aufweist.

6. Verfahren gemäß Anspruch 1, wobei das Metallchlorid bei Schritt ii) in einer Menge von 20 bis 300 Gewichtsteilen bezogen auf 100 Gewichtsteile des Ferroaluminophosphat-Zeoliths enthalten ist.

7. Feuchteadsorptionsmittel, hergestellt durch das Verfahren zur Herstellung des hybriden Zeolith-Metallchlorid-Feuchteadsorptionsmittels gemäß einem Anspruch ausgewählt aus Anspruch 1 bis Anspruch 6.

8. Verfahren zur Herstellung einer Feuchteadsorptionszusammensetzung zur Oberflächenbeschichtung unter Verwendung des Zeolith-Metallchlorid-Feuchteadsorptionsmittels gemäß Anspruch 7, wobei das Verfahren zur Herstellung der Feuchteadsorptionszusammensetzung zur Oberflächenbeschichtung die Schritte umfasst:
i) Dispergieren des Feuchteadsorptionsmittels in einem Dispergiermittel, um eine Dispersion zu erhalten;
ii) Zugeben eines Bindemittelharzes auf Epoxidbasis zu der Dispersion, um eine Lösung zu erhalten; und
iii) Zugeben eines Härters zu der Lösung von Schritt ii).

9. Verfahren gemäß Anspruch 8, wobei die Feuchteadsorptionszusammensetzung eine maximale Feuchteadsorptionsmenge (die Menge an adsorbierter Feuchte pro Gewichtseinheit an Adsorptionsmittel) von 0,2 bis 0,9 g/g in einem Bereich von P/P₀ = 0,1 bis 0,3, der ein Arbeitsdruckbereich einer Kühlvorrichtung vom Adsorptionstyp ist, aufweist.

10. Verfahren gemäß Anspruch 8, wobei das Bindemittelharz auf Epoxidbasis bei Schritt ii) in einer Menge von 3,75 bis 11,25 Gewichtsteilen bezogen auf 100 Gewichtsteile des Feuchteadsorptionsmittels enthalten ist.

11. Verfahren gemäß Anspruch 8, wobei der Härter bei Schritt iii) in einer Menge von 1 bis 10 Gewichtsteilen bezogen auf 100 Gewichtsteile des Feuchteadsorptionsmittels enthalten ist.

12. Verfahren gemäß Anspruch 8, wobei das Bindemittelharz auf Epoxidbasis ein oder mehrere Bindemittelharze ausgewählt aus der Gruppe bestehend aus Novolacepoxid, Bisphenol A, Bisphenol F, Noboracepoxid, nichtaromatischem Epoxid, alicyclischem Epoxid, Glycidylester und epoxyfunktionellem Acryl umfasst.

13. Feuchteadsorptionszusammensetzung zur Oberflächenbeschichtung, hergestellt durch das Herstellungsverfahren gemäß einem von Anspruch 8 bis Anspruch 12.

14. Klimaanlage, die eine Adsorptionseinheit umfassend die Feuchteadsorptionszusammensetzung zur Oberflächenbeschichtung gemäß Anspruch 13 aufweist.

## Revendications

1. Procédé de production d'un adsorbant d'humidité hybride zéolite-chlorure métallique, le procédé contenant les étapes consistant à :
i) dissoudre un chlorure métallique (300) dans de l'eau pour préparer une première solution ;
ii) mélanger une zéolite poreuse (100) comprenant une zéolite de ferroaluminophosphate avec la première solution pour préparer une seconde solution ;
iii) pulvériser la seconde solution pour former des gouttelettes (621) ayant un diamètre moyen des particules prédéfini ; et
iv) sécher les gouttelettes pour produire un adsorbant d'humidité,
dans lequel les étapes iii) et iv) sont effectuées à l'aide d'un sécheur par pulvérisation (600) ; et dans lequel l'étape iii) ou l'étape iv) est mise en œuvre à 100 à 150 °C.

2. Procédé selon la revendication 1, dans lequel le sécheur par pulvérisation comprend un quelconque pulvérisateur choisi entre un pulvérisateur de type à buse de mise sous pression, un pulvérisateur de type à ondes ultrasonores et un pulvérisateur de type à disques.

3. Procédé selon la revendication 1, dans lequel l'étape iv) comprend l'insufflation d'un gaz chauffé dans les gouttelettes pour sécher les gouttelettes.

4. Procédé selon la revendication 1, dans lequel le chlorure métallique de l'étape i) en comprend un ou plusieurs choisis dans le groupe constitué par le chlorure de calcium (CaCl₂), le chlorure de magnésium (MgCl₂) et le chlorure de lithium (LiCl).

5. Procédé selon la revendication 1, dans lequel la zéolite de ferroaluminophosphate de l'étape ii) est la zéolite de ferroaluminophosphate-5 (FAPO₄-5), des pores de 0,3 à 1,5 nm sont formés dans les particules de la zéolite de ferroaluminophosphate et la zéolite de ferroaluminophosphate a une taille des particules de 50 à 50 000 nm.

6. Procédé selon la revendication 1, dans lequel le chlorure métallique dans l'étape ii) est compris en une quantité de 20 à 300 parties en poids pour 100 parties en poids de la zéolite de ferroaluminophosphate.

7. Adsorbant d'humidité produit par le procédé de production de l'adsorbant d'humidité hybride zéolite-chlorure métallique selon une quelconque revendication choisie de la revendication 1 à la revendication 6.

8. Procédé de préparation d'une composition d'adsorption d'humidité pour le revêtement de surfaces à l'aide de l'adsorbant d'humidité zéolite-chlorure métallique selon la revendication 7, le procédé de préparation de la composition d'adsorption d'humidité pour le revêtement de surfaces contenant les étapes consistant à :
i) disperser l'adsorbant d'humidité dans un dispersant pour préparer une dispersion ;
ii) ajouter une résine liante à base d'époxy à la dispersion pour obtenir une solution ; et
iii) ajouter un agent durcisseur à la solution de l'étape ii).

9. Procédé selon la revendication 8, dans lequel la composition d'adsorption d'humidité a un degré d'adsorption d'humidité maximal (la quantité d'humidité adsorbée par unité de poids de l'adsorbant) de 0,2 à 0,9 g/g dans une plage de P/P₀ = 0,1 à 0,3 qui est une plage de pression motrice d'un réfrigérateur de type à adsorption.

10. Procédé selon la revendication 8, dans lequel la résine liante à base d'époxy dans l'étape ii) est comprise en une quantité de 3,75 à 11,25 parties en poids pour 100 parties en poids de l'adsorbant d'humidité.

11. Procédé selon la revendication 8, dans lequel l'agent durcisseur dans l'étape iii) est compris en une quantité de 1 à 10 parties en poids pour 100 parties en poids de l'adsorbant d'humidité.

12. Procédé selon la revendication 8, dans lequel la résine liante à base d'époxy comprend une ou plusieurs résines liantes choisies dans le groupe constitué par un époxyde novolaque, un bisphénol A, un bisphénol F, un époxyde noborac, un époxyde non aromatique, un époxyde alicyclique, un ester de glycidyle et une résine acrylique à fonction époxy.

13. Composition d'adsorption d'humidité pour le revêtement de surfaces préparée par le procédé de préparation selon une quelconque revendication de la revendication 8 à la revendication 12.

14. Climatiseur comprenant une unité d'adsorption contenant la composition d'adsorption d'humidité pour le revêtement de surfaces selon la revendication 13.
